# FASCICULE DE BREVET EUROPEEN

(11) **EP 3 307 092 B1**
(45) Date de publication et mention de la délivrance du brevet: **29.09.2021**
(21) Numéro de dépôt: 16732489.6
(22) Date de dépôt: 09.06.2016
(51) Int. Cl.: A23L 33/17, A23J 3/26, A23L 7/117

(54) **PRODUIT ALIMENTAIRE EXPANSE SEC A BASE DE PROTEINE ET SON PROCEDE DE FABRICATION**
PROTEINBASIERTES TROCKENEXPANDIERTES LEBENSMITTELPRODUKT UND VERFAHREN ZUR HERSTELLUNG DAVON
PROTEIN-BASED DRY-EXPANDED FOOD PRODUCT AND METHOD FOR PRODUCING SAME

(30) Priorité: 12.06.2015 BE 201505357
(43) Date de publication de la demande: 18.04.2018
(73) Titulaire: Proteifood S.A., 7850 Enghien (BE)
(72) Inventeur: SNAPPE, Jean-Jacques, 62149 Festubert (FR); OLIVIER, Pierre, 1180 Bruxelles (BE)
(74) Mandataire: Argyma
(86) Numéro de dépôt international: PCT/EP2016/063137
(87) Numéro de publication internationale: WO 2016/198514

(56) Documents cités:
- WO-A1-2005/074705
- WO-A1-2014/003546
- WO-A1-2016/204765
- WO-A2-2010/082053
- GB-A- 2 551 237
- US-A- 3 891 774
- US-A1- 2005 089 623
- US-A1- 2006 210 695
- US-A1- 2010 221 396

## Description

### Domaine de l'invention

La présente invention se rapporte à un produit alimentaire expansé sec à base de protéine pour l'alimentation humaine ou animale et à un procédé pour sa fabrication. Plus particulièrement l'invention se rapporte à un produit alimentaire expansé sec de type biscuit ou flocon ou gaufrette, notamment un produit croustillant nutritionnel à basses calories et à bonnes propriétés organoleptiques, pouvant être consommé tel quel à l'état sec ou bien en mélange avec un liquide comestible tel que du lait ou de l'eau. En particulier, l'invention se rapporte à un produit alimentaire de type biscuit ou flocon ou gaufrette à longue conservation, sans farine de céréale, mais offrant à la fois l'apport en protéines (en particulier pour les produits nutritionnels) et l'apport en sels minéraux, notamment en calcium, magnésium, phosphore et fer, nécessaire aux enfants, adultes, sportifs et personnes âgées. La présente invention se rapporte également à un procédé économique et efficace pour la fabrication d'un tel produit alimentaire expansé sec.

### Arrière-plan de l'invention

Des biscuits hyperprotéinés, par exemple à base de farine de blé, farine de lupin, protéines de soja, gluten de blé, et le cas échéant gomme d'acacia, poudre levante, etc., sont bien connus dans les régimes d'amincissement pour alimentation humaine pour permettre la combustion des graisses et la perte de poids tout en prévenant la fonte de la masse musculaire. Dans ce contexte, on connaît aussi divers biscuits, gâteaux, crêpes à base de protéines de lactosérum. Toutefois, à défaut d'un procédé de fabrication efficace et flexible à grande échelle, de tels biscuits ont le plus souvent un coût de fabrication et, par conséquent, un prix de vente trop élevé pour une large part de la population. Par ailleurs, il est aussi largement reconnu que, dans ce type de produit alimentaire sec destiné à la consommation humaine et après un entraînement physique ou sportif, le caractère croustillant est souvent obtenu au détriment des propriétés organoleptiques.

Malgré leur intérêt potentiel pour le secteur des biscuits secs, les protéines de lait, sous forme d'isolats ou de concentrés, n'y trouvent encore qu'un faible débouché pour les produits diététiques pour l'alimentation humaine, par comparaison à la production de fromages frais, yaourts, boissons, glaces, sauces, laits infantiles, et pour l'alimentation animale.

Par ailleurs, des biscuits expansés secs sont déjà connus pour l'alimentation des animaux domestiques tels que chiens et chats, ainsi que des chevaux.

Dans la littérature, sont connus des produits alimentaires expansés constitués par des mélanges ternaires de glucides, lipides et protides. Leur teneur en eau peut être de 10 à 35% avant expansion, et jusqu'à 10% après expansion. L'expansion peut être obtenue par extrusion ou bien par chauffage rapide par micro-ondes d'un article gélatinisé, et peut atteindre un coefficient de 3 à 5.

On connaît aussi la fabrication de produit fromager sec et expansé consistant à soumettre une matière d'origine fromagère ayant une teneur en eau de 25 à 65% en poids à un traitement de séchage/expansion par passage dans un four à micro-ondes sous vide à une température à 400°C jusqu'à une teneur en eau inférieure à 10% en poids, pendant 20 secondes à 10 minutes, permettant d'atteindre un coefficient d'expansion de 2,5 à 4,0.

On connaît aussi un produit croustillant, riche en protéines et pauvre en graisses, obtenu à partir d'un mélange de 18 - 38% en poids de protéines de lactosérum, de soja, de riz ou de pois, de 5 - 30% d'amidon et de 40 - 65% en poids d'eau, avec addition d'un conservateur, obtenu par expansion du mélange par chauffage dans un four à micro-ondes. On connaît aussi un produit fromager expansé par la chaleur par micro-ondes, comprenant 20 - 59% en poids d'une protéine de lait, 10 - 50% en poids d'amidon, 2 - 24% en poids d'un alcool de sucre (sorbitol, xylitol, mannitol ou glycérol), et 3 - 15% en poids d'eau, dans lequel la teneur en graisse ne dépasse pas 10% en poids. Ces produits manquent toutefois de caractère nutritionnel en raison de la proportion d'amidon ajouté et de sucre.

On connaît aussi la préparation de produit laitier granuleux et expansé par traitement par micro-ondes d'un fromage dur en poudre ayant des particules de taille 0,2 - 5 mm et une teneur en humidité ne dépassant pas 45% jusqu'à obtenir une teneur en humidité inférieure à 15%. Le produit obtenu est toutefois limité par les qualités gustatives et la teneur en matière grasse du fromage de départ.

On connaît aussi un précurseur thermo-expansible pour former un fromage synthétique, comprenant (en poids) 12 - 26% de protéine de lait, 7 - 30% d'amidon et 46 ― 60% d'eau, ledit précurseur ne comprenant pas plus de 10% de graisse. Après expansion thermique, ce précurseur forme un fromage synthétique croustillant, comprenant (en poids) 20 - 59% de protéine de lait, 12 - 68% d'amidon et 3 - 15% d'eau, ledit fromage synthétique ne comprenant pas plus de 22% de graisse.

Il existe donc encore un besoin dans la technique alimentaire pour des produits expansés croustillants à caractère diététique à base de protéines, en particulier des produits alimentaires croustillants à très faibles teneurs en amidon et en graisse, offrant une grande variété de goûts possibles, salés ou sucrés, en fonction des préférences des consommateurs. Il existe aussi un besoin dans la technique alimentaire pour des produits expansés croustillants à base de protéines d'origines variées, animales et/ou végétales, permettant de s'adapter à la fois à la disponibilité des ressources agricoles locales et aux préférences diététiques des consommateurs, par exemple en matière de régimes végétariens. Il existe aussi un besoin pour des produits croustillants de type biscuits pour l'alimentation animale, notamment pour les animaux domestiques de compagnie. Il existe aussi un besoin dans la technique alimentaire pour un procédé de fabrication de tels produits expansés croustillants, qui soit économique et efficace et qui offre à faible coût une grande flexibilité en fonction des types de protéines utilisables comme matières de départ, en fonction des qualités organoleptiques des produits désirés et en fonction du type d'alimentation, humaine ou animale, visé.

### Résumé de l'invention

Il a été trouvé de manière surprenante que les besoins exprimés ci-avant dans la technique alimentaire humaine et animale, ainsi que les problèmes diététiques mentionnés ci-dessus pouvaient être avantageusement résolusavec le produit de la revendication 1 et le procédé de fabrication du produit selon la revendication 12.

On notera que le document US 3 891 774 A ne décrit pas de produit contenant un additif texturant tel que revendiqué ; mais du propylène glycol.

Le document US 2005/089623 A1 décrit un produit contenant clairement de l'amidon. L'intérêt de l'invention de la présente demande est de s'affranchir de l'amidon pour obtenir des produits d'une texture croustillante, moins caloriques et mieux adaptés à de nombreux régimes alimentaires particuliers.

### Description détaillée de l'invention

Un premier aspect de l'invention concerne donc un produit alimentaire expansé sec comprenant au moins les ingrédients suivants :
- un concentré protéique de protéine d'origine animale ou végétale, de qualité alimentaire,
- un additif texturant de qualité alimentaire choisi parmi le groupe constitué des hydrocolloïdes et gélifiants végétaux, les additifs protéolytiques et leurs produits d'hydrolyse, et les agents acidifiants et leurs sels, et
- de l'eau résiduelle,
- ledit produit alimentaire expansé sec étant exempt d'amidon.

Par « concentré protéique de protéine d'origine animale », on entend toute origine autre qu'humaine ou végétale. Ainsi il pourrait s'agir d'un concentré provenant d'insectes.

Par « produit sec » au sens de la présente invention, on entend un produit dont la teneur résiduelle en eau permet de conserver intactes les propriétés gustatives et organoleptiques d'origine pendant une durée de plusieurs mois, de préférence une durée de 2 à 30 mois, sans qu'il soit besoin de stocker le produit dans des conditions de réfrigération habituelle des aliments (température inférieure à 5°C environ). Cette propriété de conservation de la qualité gustative et organoleptique correspond en général à une teneur résiduelle en eau inférieure à 12% en poids environ, par exemple inférieure à 10% en poids environ, par exemple ne dépassant pas 9% environ en poids, ou 8% environ en poids, mais le plus souvent d'au moins 3% environ en poids, par exemple d'au moins 4%, d'au moins 5%, d'au moins 6% ou d'au moins 7% en poids. L'homme du métier sait qu'il n'est pas souhaitable, à la fois du point de vue du coût de fabrication croissant lié à l'élimination de l'eau, et du point de vue de la conservation du produit pendant une période de stockage prolongée (même dans des conditions idéales de température et d'humidité, voir ci-après), de diminuer la teneur résiduelle en eau dans le produit alimentaire en dessous de 3% environ en poids. A l'inverse, une teneur résiduelle en eau supérieure à 12% en poids ne permet plus, en règle générale, de qualifier le produit alimentaire comme un produit sec. Il va de soi, quelle que soit la nature de l'emballage dans lequel il est conditionné, et malgré une teneur résiduelle en eau ainsi sélectionnée, que la bonne conservation du produit expansé sec selon l'invention dans le temps ne peut être assurée si le produit est maintenu durablement à une température supérieure à 25°C. Il est naturellement toujours conseillé de stocker le produit expansé sec, quel que soit l'emballage employé pour son conditionnement, dans un endroit frais et sec, c'est-à-dire dans un local à air conditionné maintenu entre 10°C et 20°C environ en moyenne et à un degré d'hygrométrie contrôlé.

Par « produit expansé » au sens de la présente invention on entend un produit alvéolé dont les alvéoles remplis d'air représentent au moins 50% du volume du produit, le cas échéant au moins 65% du volume, ou au moins 80% du volume, et même jusqu'à 85% du volume. Cette structure expansée confère au produit selon l'invention un caractère croustillant apprécié du consommateur qui peut être quantifié, si besoin est, notamment par la mesure de la force de rupture (exprimée en N), selon des normes et méthodes bien connues de l'homme de la technique.

Le produit expansé sec du premier aspect de l'invention n'est pas un produit de boulangerie industrielle traditionnelle, en majorité à base de farine de céréale (70% en poids de farine de blé dans le cas des crackers disponibles sur le marché) et donc contenant de grandes quantités de l'amidon inhérent à une telle farine. Sa composition comprend des ingrédients essentiels, tous de qualité alimentaire, tels que précisés ci-dessus et dans chacune des revendications annexées. Par ingrédients essentiels on entend des ingrédients représentant tous ensemble au moins environ 96% du poids du produit, de préférence au moins 98% du poids du produit, et encore plus préférentiellement au moins 99% du poids du produit. Ces proportions s'entendent relativement au produit expansé sec brut, c'est-à-dire avant l'application de tout revêtement ou nappage alimentaire à sa surface. Le complément à 100% en poids est constitué, le cas échéant, d'ingrédients facultatifs tels qu'édulcorants, colorants, aromatisants comme détaillé ci-après.

Par « qualité alimentaire », on entend, pour chaque ingrédient, une qualité satisfaisant aux normes nationales et internationales en vigueur en matière sanitaire pour l'alimentation humaine ou animale, concernant notamment la pureté des ingrédients et leur non-contamination par des agents physiques, chimiques ou biologiques potentiellement dangereux.

Comme pour les produits de biscuiterie industrielle (salée et sucrée) traditionnelle, le produit expansé sec selon l'invention peut, pour des besoins commerciaux liés à son aspect visuel et au goût du consommateur, être recouvert, enrobé ou nappé au moyen d'une ou plusieurs couches de revêtement de qualité alimentaire, sans pour autant altérer ses qualités diététiques, gustatives et organoleptiques principales.

Par « concentré protéique » utilisable pour le produit expansé sec et le procédé de fabrication selon l'invention, on entend une matière première très majoritairement, ou essentiellement, constituée de protéines d'origine naturelle (animale ou végétale), et donc exempte des constituants principaux non-azotés habituellement rencontrés dans les farines de céréales (environ 70% en poids d'amidon dans les farines de blé) ou les farines animales. Le « concentré protéique » présent dans le produit alimentaire expansé sec selon l'invention est donc une préparation extraite d'une matière première d'origine naturelle (animale ou végétale), et dans laquelle les composants non protéiques ont été éliminés pour l'essentiel, en ayant recours à une ou plusieurs des techniques bien connues de fractionnement, précipitation, extraction, séparation, isolement, purification, etc. En fonction de la teneur pondérale en protéine par rapport à la matière sèche du concentré protéique, et donc en fonction du procédé d'obtention du concentré protéique, le terme « concentré protéique » s'entend comme comprenant aussi les « isolats protéiques » ayant une teneur pondérale en protéine (par rapport à la matière sèche) d'au moins 85% en poids. Dans la mesure de leur disponibilité commerciale, on préfère des concentrés protéiques ou isolats protéiques substantiellement anhydres ou à teneur résiduelle en eau contrôlée et réduite.

De nombreux concentrés protéiques de protéines d'origine naturelle (animale ou végétale) appropriés comme ingrédients pour le produit expansé sec et pour le procédé selon l'invention sont disponibles dans le commerce. Pour les concentrés protéiques de protéines d'origine animale, on peut citer des concentrés protéiques laitiers tels que ceux extraits de lait de vache, de chèvre, de jument, de bufflesse, de brebis, etc. Leur composition est détaillée ci-après concernant un mode de réalisation particulier de la présente invention.

La composition de base du produit alimentaire expansé sec selon le premier aspect de l'invention décrit ci-dessus comprend des ingrédients essentiels, dont un ou plusieurs additifs texturants (tels que définis ci-après). Le produit alimentaire expansé sec selon le premier aspect de l'invention est exempt d'amidon, natif ou modifié.

La composition de base du produit alimentaire expansé selon l'invention peut en particulier comprendre au moins un concentré protéique animal (par exemple laitier ou de poisson) ou végétal. Comme concentrés protéiques laitiers on peut citer ceux contenant des caséines, des protéines sériques ou solubles, et/ou des extraits de celles-ci (par exemple bêta-lactoglobuline, alpha-lactalbumine, immunoglobulines, lactoferrine, etc.). Pour plus de détails quant aux composants possibles d'un concentré protéique laitier, on se réfèrera à l'article de J.J. Snappe et alia intitulé « Protéines laitières » paru dans Dossiers Techniques de l'Ingénieur (juin 2010).

Comme concentré protéique de protéine d'origine animale on peut encore citer des concentrés extraits de farines de poisson, dont il existe de nombreux exemples commerciaux, ou de vers de terre (*Eisenia foetida*)*.*

Comme concentré protéique de protéine d'origine végétale, on peut citer, mais de façon non limitative, des concentrés de protéines végétales telles que des protéines issues de plantes légumineuses (soja, pois, lupin, lentilles, fèves, haricots), de céréales (blé, avoine, maïs, millet, orge, seigle, sarrasin, riz, épeautre, sésame), de graines oléagineuses (courge, lin, arachide, citrouille) ou de fruits oléagineux (amandes, cacahuètes, pistaches, noisettes, noix), ou des extraits de ceux-ci.

Comme concentré protéique originaire d'insectes on peut citer, mais de façon non limitative, des concentrés de protéines extraits de farines d'insectes du commerce telles que, mais sans limitation à, des farines de sauterelles, de charançons, de chenilles, de vers à soie, de criquets (*Locusta migrator* et *Gryllus bimaculatus*)*.*

Etant donné la variété de concentrés protéiques utilisables pour le procédé et le produit alimentaire expansé sec selon l'invention, il est facile d'adapter la production à la disponibilité locale tout en réalisant toute la gamme des produits alimentaires expansés secs désirés en fonction des caractéristiques du marché local.

La teneur en protéines du concentré protéique animal (par exemple laitier ou de poisson) ou végétal est très élevée, supérieure à 65% en poids, de préférence supérieure à 75% en poids, de préférence supérieure à 80% en poids, et même, dans le cas des isolats protéiques, supérieure à 85% en poids. Le complément à 100% en poids est habituellement constitué d'eau (de préférence au plus 5% en poids environ) et d'autres composants pouvant avoir une utilité nutritionnelle (par exemple des sels minéraux tels que ceux de calcium, des carbohydrates, des vitamines, de la matière grasse) dans des proportions ne nuisant pas à la qualité alimentaire ni aux qualités gustatives, diététiques et/ou organoleptiques des produits alimentaires expansés secs selon l'invention.

La forme physique du concentré protéique utilisable pour le procédé et le produit expansé sec selon l'invention n'est pas une caractéristique particulièrement limitative de la présente invention ; toutefois une forme de poudre avec une granulométrie contrôlée et régulière est évidemment préférable, notamment pour la miscibilité avec les autres ingrédients principaux. Des gammes de granulométries souhaitables pour la mise en œuvre de l'invention dépendent de la source de protéines utilisée et de la disponibilité commerciale, mais sont en général comprises entre environ 30 et 200 µm, de préférence entre 50 et 150 µm, selon l'origine, animale (par ex. laitière ou de poisson) ou végétale, du concentré protéique.

Selon un premier mode de réalisation, les proportions de l'eau et du concentré protéique de protéine animale (par exemple laitier ou de poisson) ou végétale dans la composition de base (y compris le précurseur thermo-expansible) pour le produit alimentaire expansé sec de l'invention peuvent varier dans de larges limites mais peuvent être aisément déterminées par l'homme de métier en fonction de paramètres techniques tels que le choix de la protéine animale ou végétale, sa teneur dans le concentré protéique, les propriétés diététiques et nutritionnelles désirées pour le produit alimentaire final, la capacité d'expansion et le caractère croustillant désirés, et de paramètres économiques tels que la durée du processus de fabrication et le prix de revient. En particulier, il est habituellement souhaitable de prévoir, dans le produit alimentaire expansé sec de ce premier mode de réalisation de l'invention, d'environ 60% à 95% en poids, par exemple d'environ 65% à 90% en poids, par exemple d'environ 70% à 85% en poids, par exemple d'environ 75% à 80% en poids, de la protéine du concentré protéique, d'origine animale ou végétale.

Selon un second mode de réalisation, les proportions de l'eau et du concentré protéique de protéine animale (par exemple laitier ou de poisson) ou végétale dans la composition de base (y compris le précurseur thermo-expansible) pour le produit alimentaire expansé sec de l'invention et l'étape initiale du procédé selon l'invention peuvent varier dans de larges limites mais peuvent être aisément déterminées par l'homme de métier en fonction de paramètres techniques tels que le choix de la matière grasse, le choix de la protéine animale ou végétale et de la teneur en protéine dans le concentré protéique, les propriétés diététiques et nutritionnelles désirées pour le produit alimentaire final, la capacité d'expansion et le caractère croustillant désirés, et de paramètres économiques tels que la durée du processus de fabrication (en particulier l'étape de maturation) et le prix de revient. Ces proportions sont ajustées par l'homme du métier de manière à pouvoir réaliser aisément, dans l'étape initiale de production, l'hydratation du concentré protéique animal (par exemple laitier ou de poisson) ou végétal, tout en ajustant de manière appropriée la viscosité du mélange en vue des étapes suivantes. A cet effet, il est généralement préférable que le rapport en poids concentré protéique/eau soit compris entre environ 1/4 et 1/1, de préférence entre 1/3 et 1/2 environ. Afin de respecter l'objectif d'un produit alimentaire croustillant diététique, la proportion de matière grasse dans la composition de base utilisable pour le produit expansé sec et l'étape initiale du procédé selon l'invention doit être maintenue aussi faible que possible. En fonction du concentré protéique animal (par exemple laitier ou de poisson) ou végétal choisi, l'homme du métier sait déterminer, de manière empirique, et au moyen d'un nombre limité d'essais préliminaires, les proportions d'eau et du concentré protéique les mieux adaptées pour réaliser l'étape initiale du procédé selon l'invention sans difficulté tout en garantissant la condition diététique et nutritionnelle du produit expansé sec final.

La composition utilisable pour le produit alimentaire expansé sec et le procédé de fabrication de l'invention comprend l'ajout d'au moins un agent ou additif texturant tel qu'un hydrocolloïde, un épaississant, un émulsifiant, un gélifiant, un additif protéolytique ou son produit d'hydrolyse, un agent acidifiant ou l'un de ses sels. De préférence on choisit un hydrocolloïde autre que la gélatine. Comme exemples non limitatifs de texturants utilisables on peut citer notamment des agents d'origine végétale tels que l'acide alginique ; les alginates de sodium, de potassium, d'ammonium, de calcium et de propylène glycol ; des carraghénanes (kappa et iota) ; les gommes de caroube, d'avoine, ou de guar ; la gomme arabique, la gomme adragante, la gomme xanthane, la gomme karaya, la gomme tara, la gomme gellane, la gomme ghatti, le mannitol, et la carboxyméthylcellulose sodique, ou le mélange de plusieurs d'entre eux. Le type d'agent texturant (par exemple un hydrocolloïde) ajouté dépend, de façon connue de l'homme du métier, de l'augmentation de la viscosité désirée et du type de texture désirée pour le produit alimentaire expansé sec final. La proportion d'agent texturant (par exemple un hydrocolloïde) ajouté est une quantité suffisante pour obtenir l'effet texturant désiré pour le produit expansé sec final, en fonction du type d'agent texturant choisi. Elle est habituellement comprise entre environ 0,3% et environ 10% en poids, de préférence entre 0,4% et 4% en poids du produit alimentaire expansé sec selon l'invention.

La composition utilisable pour le produit alimentaire expansé sec selon le premier aspect de l'invention peut comprendre au moins un agent protéolytique, ou un produit d'hydrolyse de celui-ci, destiné à couper au moins une partie, de préférence une majeure partie ou la totalité, des protéines présentes dans le concentré protéique en fragments de protéines de plus petite taille, cette coupure ayant pour effet de modifier la texture. Un agent protéolytique préféré est donc une enzyme d'origine animale, végétale ou microbienne de la catégorie des protéases, en particulier des exo- et endo-peptidases dont la coupure implique l'emploi d'une molécule d'eau, ou bien des exopeptidases. Le choix de cet agent protéolytique, et de sa quantité efficace, dépend, de manière bien connue de l'homme du métier, des protéines présentes dans le concentré protéique utilisé. Selon un mode de réalisation particulier de l'invention, lorsque le concentré de protéine de qualité alimentaire est un concentré de protéine de lait, un additif protéolytique approprié est constitué de présure ou d'une protéase (endopeptidase) naturelle extraite de la présure, telle que la chymosine. On peut aussi utiliser de la chymosine synthétique pure obtenue par fermentation d'un organisme (par ex. un champignon tel qu'*Aspergillus niger)* génétiquement modifié. Comme autres additifs protéolytiques appropriés on peut citer d'une part la pepsine et d'autre part des enzymes actives d'origine végétale telles que la cyprosine et la cardosine. La quantité efficace d'agent protéolytique, ou l'un de ses produits d'hydrolyse, est habituellement très faible, de l'ordre de 20 à 200 ppm, et cet agent se retrouve donc à l'état de traces dans le produit alimentaire expansé sec selon l'invention.

La composition utilisable pour le produit alimentaire expansé sec selon le premier aspect de l'invention peut aussi comprendre au moins un sel d'agent acidifiant, ou bien un précurseur de celui-ci, de préférence un sel autre qu'un citrate ou un phosphate. L'agent acidifiant en question peut être un acide fort ou faible (tel que défini par son pKa de manière bien connue de l'homme du métier), minéral ou organique. A titre d'exemple non limitatif d'un tel acide on peut citer l'acide sulfurique, l'acide gluconique, etc. Le sel ou précurseur d'agent acidifiant doit être de qualité acceptable pour l'alimentation humaine ou animale. Un sel d'agent acidifiant utilisable, en particulier lorsque le concentré de protéine de qualité alimentaire est un concentré de protéine de soja, est le sulfate de calcium (sel de calcium de l'acide sulfurique). Un sel d'agent acidifiant utilisable, en particulier lorsque le concentré de protéine de qualité alimentaire est un concentré de protéine de lait, est un gluconate ou bien un précurseur de gluconate sous forme d'un additif alimentaire tel que la delta-gluconolactone (additif E575). Un ferment lactique ou un autre organisme vivant capable d'acidifier le milieu est également utilisable. Une quantité appropriée de sel d'agent acidifiant, ou bien de précurseur de celui-ci, est une quantité nécessaire et suffisante pour procéder à l'acidification du milieu pendant la coupure d'au moins une partie, de préférence une majeure partie ou la totalité, des protéines présentes dans le concentré protéique en fragments de protéines de plus petite taille. Chaque additif peut participer ainsi à la coagulation du mélange en milieu acide, par exemple en déstabilisant les protéines, en particulier les caséines. Une quantité préférée de sel dérivé d'un agent acidifiant, autre qu'un citrate ou un phosphate, ou bien de précurseur de celui-ci, est habituellement comprise entre 0,2% et 6% en poids, par exemple entre 0,5% et 4% en poids du produit alimentaire expansé sec.

La composition du produit alimentaire expansé sec selon l'invention peut comprendre en outre un ou plusieurs additifs auxiliaires de fabrication tels que définis ci-dessous, afin de conférer au produit final des propriétés nutritionnelles désirables.

Un produit expansé sec selon l'invention, ne comprenant pas de sel de qualité alimentaire dérivé d'un agent acidifiant, et/ou d'additif protéolytique ou produit d'hydrolyse de celui-ci, présente aussi une très bonne capacité d'expansion par la chaleur, mais un caractère croustillant moins prononcé.

Pour la fabrication du produit alimentaire expansé sec selon l'invention, il est utile de disposer d'un précurseur thermo-expansible capable de former le produit final par simple expansion à la chaleur avec réduction de la teneur en eau par traitement au moyen de micro-ondes. Le précurseur thermo-expansible comprend au moins les ingrédients suivants :
- un concentré protéique de protéine d'origine animale ou végétale, de qualité alimentaire,
- un additif texturant de qualité alimentaire choisi parmi le groupe constitué des hydrocolloïdes et gélifiants végétaux, les additifs protéolytiques et leurs produits d'hydrolyse, et les agents acidifiants et leurs sels et
- 65% à 85% d'eau,
ledit précurseur thermo-expansible étant exempt d'amidon.

Le précurseur thermo-expansible, selon l'invention, peut comprendre en outre un sel de qualité alimentaire dérivé d'un agent acidifiant, de préférence autre qu'un citrate ou phosphate, et/ou un additif protéolytique ou un produit d'hydrolyse de celui-ci. Chacun des ingrédients de ce précurseur peuvent être de nature et en quantité telles que définies ci-dessus au sujet du produit alimentaire expansé sec. Puisque le traitement thermique du précurseur thermo-expansible aura pour effet, simultanément avec l'expansion en volume, de réduire la teneur en eau jusqu'au niveau d'une teneur résiduelle compatible avec des exigences de conservation de longue durée à température ambiante (environ 15°C à 25°C), il va de soi que la teneur en eau dans la composition du précurseur thermo-expansible selon l'invention dépasse la teneur en eau dans le produit alimentaire expansé final, autrement dit dépasse significativement 10% ou 12% en poids. Une teneur appropriée en eau dans la composition du précurseur thermo-expansible selon l'invention dépend du nombre et des proportions respectives des autres ingrédients essentiels et, le cas échéant, de la présence d'ingrédients facultatifs tels que le sel de qualité alimentaire dérivé d'un agent acidifiant, et/ou l'additif protéolytique ou son produit d'hydrolyse. Elle dépend aussi des conditions de viscosité à réaliser pour une manipulation aisée du mélange en fonction des conditions de température choisies pour le procédé de préparation (voir ci-après). La série d'exemples fournie ci-après démontre qu'une teneur appropriée en eau dans la composition du précurseur thermo-expansible selon l'invention est comprise dans une gamme de 65% à 85% en poids de tous les ingrédients pris ensemble

Le procédé de préparation du précurseur thermo-expansible du produit alimentaire expansé de l'invention comprend l'étape consistant à combiner, à une température comprise entre 4°C et 75°C, le concentré protéique de protéine d'origine animale ou végétale, l'additif texturant de qualité alimentaire et l'eau.

Le cas échéant le procédé de préparation du précurseur thermo-expansible du produit alimentaire expansé de l'invention peut comprendre au moins une étape supplémentaire consistant en l'ajout, au mélange résultant de l'étape principale de combinaison du concentré protéique de protéine d'origine animale ou végétale, de l'additif texturant de qualité alimentaire et de l'eau, d'un sel de qualité alimentaire dérivé d'un agent acidifiant, de préférence autre qu'un citrate ou phosphate, et/ou d'un additif protéolytique ou un produit d'hydrolyse de celui-ci. L'homme du métier sait déterminer, par des essais de simple routine, à la fois le type d'appareil dans lequel réaliser la combinaison initiale (y compris les moyens d'agitation éventuels) et, le cas échéant, le moment approprié pour l'ajout des ingrédients facultatifs, en fonction notamment de leur stabilité thermique et de leur réactivité avec les ingrédients essentiels.

Les définitions de procédé ci-dessus ne comprennent que les étapes essentielles à l'accomplissement du but de l'invention. Il va de soi pour l'homme du métier que des étapes intermédiaires facultatives, telles que maturation, moulage, démoulage, broyage, râpage, déshydratation partielle, peuvent être ajoutées pour faciliter le processus aboutissant au produit expansé final sous la forme désirée, en particulier en lui procurant une texture souhaitable. On expose ci-après, à titre non limitatif, un mode de réalisation particulier d'un procédé de fabrication d'un produit alimentaire expansé sec selon le second mode de réalisation de l'invention, comprenant de telles étapes intermédiaires. Ce procédé comprend à titre seulement illustratif au moins les étapes suivantes :
(a) mélanger jusqu'à homogénéisation une composition de base comprenant comme ingrédients essentiels de l'eau, au moins un concentré protéique d'origine animale ou végétale de qualité alimentaire, et au moins un additif texturant de qualité alimentaire choisi parmi les hydrocolloïdes et gélifiants végétaux, et le cas échéant comme ingrédients facultatifs un sel de qualité alimentaire dérivé d'un agent acidifiant, autre qu'un citrate ou phosphate, et/ou un additif protéolytique ou un produit d'hydrolyse de celui-ci.
(b) soumettre le mélange homogène obtenu à l'étape (a) à un traitement thermique par chauffage jusqu'à une température comprise entre 65°C et 140°C environ, suivi d'un refroidissement jusqu'à une température ne dépassant pas 50°C maximum,
(c) le cas échéant ajouter, pendant ou après le refroidissement de l'étape (b), au moins un additif protéolytique ou un produit d'hydrolyse de celui-ci et au moins un agent acidifiant ou un précurseur ou un sel de celui-ci, et homogénéiser le mélange résultant,
(d) verser le mélange homogène obtenu à l'étape (c) dans un moule,
(e) laisser le mélange homogène prendre de la texture dans le moule à une température comprise entre 5°C et 65°C pendant une durée suffisante pour procéder à sa texturation,
(f) le cas échéant broyer ou râper, le cas échéant après une déshydratation partielle pour abaisser sa teneur en eau jusqu'à une valeur comprise entre 25% et 40% en poids, le mélange coagulé obtenu à l'étape (e) afin d'ajuster sa granulométrie dans une gamme prédéterminée, et
(g) soumettre le mélange le cas échéant broyé ou râpé, et le cas échéant partiellement déshydraté, obtenu à l'étape (e) ou à l'étape (f), à un traitement par micro-ondes pour procéder à son expansion et sa déshydratation, jusqu'à obtenir ledit produit alimentaire expansé sec possédant le ratio d'expansion et la teneur résiduelle en eau requis.

L'étape (a) du procédé selon l'invention consiste à homogénéiser les composants de la composition de base. Ceci est effectué, de préférence dans un mélangeur émulsionneur solide-liquide bien connu dans l'industrie alimentaire, à une température suffisante et en procurant une agitation suffisante, pour que l'homogénéisation soit atteinte dans un temps minimum. A titre d'exemple non limitatif d'équipement utilisable pour les étapes (a), (b) et (c) du procédé selon la présente invention on peut citer notamment des mélangeurs-cuiseurs à double enveloppe pour le chauffage et le refroidissement, et à injection directe de vapeur tels que les machines universelles UMSK commercialisées par le département Stephan de la société Sympak Process Engineering GmbH (Schwarzenbek, Allemagne). Le choix du type d'équipement (forme du déflecteur de flux de matière, outil de type rotor-stator, etc.) et des paramètres de fonctionnement (sens de rotation et de contre-rotation, vitesse d'agitation, etc.) du mélangeur émulsionneur solide-liquide est à la portée de l'homme de métier, au moyen d'un nombre limité d'essais préliminaires, une fois connues les proportions respectives d'eau et du concentré protéique animal ou végétal dans la composition de base. Il est préférable que la vitesse d'agitation dans le mélangeur solide-liquide soit comprise entre environ 500 et 2000 rpm, de préférence entre 800 et 1500 rpm. En cas d'utilisation d'appareils de type rotor/stator les équivalences de vitesse seront données en vitesses de cisaillement de préférence comprises entre 5000 et 20000 s⁻¹, plus préférablement entre 5000 et 10000 s⁻¹, par exemple 7500 s⁻¹ environ. De même il est préférable que le contenu du mélangeur solide-liquide soit maintenu à une température comprise entre environ 4°C et 60°C, de préférence entre environ 45°C et 60°C. La température peut être contrôlée au moyen d'une sonde, et peut être maintenue constante durant toute l'étape (a), ou bien peut être programmée selon un cycle variable si besoin est. En fonction des paramètres (par exemple la température et la vitesse d'agitation) choisis pour le fonctionnement du mélangeur solide-liquide, et de la masse de composition à homogénéiser, la durée de l'étape (a) est habituellement comprise entre environ 5 et 30 minutes, de préférence entre 10 et 20 minutes environ.

A l'issue de l'étape (a) du procédé selon l'invention on obtient une masse (par exemple pâteuse ou liquide visqueuse) homogène dans laquelle sont susceptibles d'être occluses de nombreuses bulles d'air. Pour la poursuite du procédé selon l'invention, il est préférable de procéder à la désaération de cette masse. Cela est effectué par tout moyen approprié, de préférence au moyen d'une mise sous vide de l'équipement contenant la masse homogène vers la fin de l'étape (a). De préférence on évite d'effectuer la mise sous vide au début de l'étape (a) afin d'éviter d'aspirer une partie du concentré protéique en poudre. De préférence on maintient un vide de 0,1 à 0,9 bar. A l'issue de cette étape on obtient donc une masse lisse, homogène et désaérée.

Dans une seconde étape (b), le mélange homogène et de préférence désaéré obtenu à l'étape (a) est soumis à un traitement thermique. Une gamme de température préférée pour le traitement thermique va de 65°C à 140°C environ, de préférence de 65°C à 90°C environ. Vers la fin de l'étape (b) on laisse la température de ce mélange homogène et le cas échéant désaéré diminuer jusqu'à 60°C environ au maximum, par exemple 45°C ou même 30°C environ, soit de façon naturelle par échange thermique avec le milieu environnant, soit par des moyens actifs de refroidissement appropriés, tels que circulation de fluide réfrigérant, ventilation, etc. De façon avantageuse, l'étape (b) peut être accomplie dans le même équipement, de type mélangeur-cuiseur (par exemple un équipement du constructeur Stephan précité) que celui de l'étape (a), en utilisant de façon appropriée les moyens de chauffage et refroidissement de celui-ci.

Au cours de l'étape suivante (c) on peut ajouter d'autres ingrédients facultatifs du produit alimentaire selon l'invention, à savoir au moins un additif protéolytique ou son produit d'hydrolyse et/ou un sel d'agent acidifiant ou bien un précurseur de celui-ci. La nature chimique et la quantité ajoutée de ces deux additifs a déjà été détaillée ci-dessus. Dans cette même étape (c) on peut aussi ajouter, le cas échéant, un complément d'au moins un des ingrédients essentiels du produit alimentaire en conformité avec la présente invention. De façon avantageuse l'étape (c) peut être accomplie dans le même équipement de type mélangeur-cuiseur (par ex. un équipement du constructeur Stephan précité) que l'étape (a).

Au cours de l'étape (a) et/ou de l'étape (c), on peut aussi ajouter un ou plusieurs additifs auxiliaires de fabrication utiles pour améliorer un ensemble de propriétés désirables, **gustatives et/ou nutritionnelles,** du produit expansé sec final. Parmi ces propriétés on peut citer notamment la durée de conservation, l'arôme, la couleur, le caractère croustillant, la richesse en fibres, etc. Les additifs auxiliaires de fabrication utiles à cet effet entrent dans des catégories d'additifs bien connus de l'homme du métier. Ces additifs sont normalement ajoutés en de très faibles proportions, en général inférieures à 1% en poids pour chacun d'eux, à l'exception des fibres pour lesquelles la proportion peut avantageusement atteindre jusqu'à environ 4% du produit final, en fonction de la texture et de la qualité nutritionnelle désirées.

Par exemple, on peut ajouter un ou plusieurs agents arômatisants choisis en fonction du goût à impartir au produit alimentaire expansé sec final. Pour des biscuits diététiques salés on peut ajouter des arômes, condiments ou épices en accord avec l'usage, par exemple paprika, poivre, girofle, etc. Pour des biscuits diététiques sucrés on peut ajouter des arômes naturels ou synthétiques tels que vanille, cannelle, fraise, framboise, orange, poire, pomme, etc. Selon leur nature, et selon l'intensité du goût désiré, la proportion en poids de l'agent arômatisant peut être comprise entre 0,2% et 1% en poids.

On peut également ajouter au moins une fibre, soluble ou insoluble, de qualité alimentaire. Afin de ne pas nuire au processus de fabrication ni aux autres qualités désirées du produit expansé sec final, on préfère des fibres solubles.

On peut également ajouter au moins un sel non acidifiant tel qu'un halogénure, par exemple un chlorure et/ou iodure, de sodium qui peut remplir, selon la quantité ajoutée, différentes fonctions : amélioration de la conservation, amélioration du gonflement au cours de l'étape ultérieure, modification du goût, etc. Les mêmes proportions en poids que ci-dessus s'appliquent à l'ajout de sel non acidifiant. Pour des raisons diététiques, la proportion de sel doit être aussi faible que possible, sauf si les produits expansés secs sont des biscuits apéritifs connus pour leur caractère salé.

Pendant l'étape (c) on peut également ajouter un ou plusieurs colorants acceptables pour l'alimentation humaine ou animale. De préférence, les additifs auxiliaires de fabrication sont ajoutés sous forme pulvérisée de manière à se mélanger aisément à la masse homogène désaérée de la composition de base.

Pendant l'étape (c) on peut également ajouter, dans le cas où l'on souhaite obtenir des produits finis avec une saveur sucrée, un ou plusieurs édulcorants naturels (tels que saccharose ou fructose) ou synthétiques (tels qu'aspartame ou acésulfame) en quantité suffisante bien connue de l'homme de l'art pour procurer le niveau édulcorant désiré.

Pendant l'étape (d) du procédé selon la présente invention, on verse le cas échéant le mélange obtenu de l'équipement de mélange (par exemple un mélangeur-cuiseur tel que décrit ci-dessus) dans un moule, ou tout autre support solide, de forme et dimension variables dans lequel aura lieu l'étape de maturation (e).

L'étape (e) du procédé selon la présente invention, pendant laquelle on laisse le cas échéant agir sur le mélange homogène (texturation ou, selon le cas, coagulation et acidification) le(s) constituant(s) facultatifs ajoutés à l'étape (c), peut être effectuée pendant une durée courte (par exemple de 5 à 120 minutes) ou relativement longue de quelques heures (par exemple de 2 à 24 heures environ) et à une température évitant la dénaturation des protéines ou fragments de protéines présents. Cette température maximale à ne pas dépasser dépend, de manière connue de l'homme du métier, des protéines (animales ou végétales) en question. Pour un rendement efficace de production, et donc pour éviter une durée excessive de la maturation, l'étape optionnelle (c) est effectuée à une température minimale de 5°C, de préférence au moins 15°C. Le choix de la température de l'étape (e) résulte donc d'un compromis entre rendement et nécessité d'éviter une dénaturation inappropriée qui affaiblirait la qualité nutritionnelle du produit alimentaire final.

Suit alors le cas échéant l'étape (f) du procédé selon la présente invention, pendant laquelle on procède à un ajustement, de préférence à une réduction, de la taille moyenne des particules solides résultant de la texturation/déshydratation et, le cas échéant, à une déshydratation partielle de la masse homogène additivée. Dans cette étape, la teneur en eau de la masse homogène additivée peut être réduite significativement jusqu'à une teneur comprise entre environ 25% et 40% en poids, de préférence entre 28% et 35% en poids. La déshydratation partielle à ce stade est facultative, étant donné qu'elle peut aussi être réalisée de manière complète à l'étape finale, sous réserve de disposer d'un équipement approprié de traitement par micro-ondes. D'autre part la taille moyenne des particules solides est diminuée par tout moyen mécanique approprié, tel que broyage ou râpage, jusqu'à une taille moyenne comprise entre environ 50 µm et 2 mm, de préférence entre environ 100 µm et 1 mm. La forme des particules obtenues à l'issue de l'étape (f) ne constitue pas un paramètre critique de la présente invention. Le terme « particule » ne sous-entend pas une forme géométrique particulière. Dans le contexte du procédé selon l'invention, toute forme, sphérique ou non, allongée ou non (par exemple des brins), peut convenir à condition de pouvoir être expansée d'un coefficient suffisant dans l'étape ultérieure (g). Selon un mode particulier de réalisation de la présente invention, le type de réduction de taille opéré vise aussi à réduire la dispersité des tailles de particules, c'est-à-dire à obtenir une population de particules de tailles aussi homogènes que possible. Cette étape (f) peut être importante en ceci que le comportement de la matière dans l'étape ultérieure de traitement par micro-ondes a été trouvé largement dépendant des paramètres tels que la teneur résiduelle en eau, la taille moyenne des particules solides, et la dispersion de leurs tailles.

Enfin, l'étape finale conduisant à l'obtention du produit alimentaire expansé sec (de type biscuit ou flocon) consiste à soumettre la pâte, déshydratée ou non, broyée ou non, obtenue à l'étape (f) à un traitement thermique tel que par micro-ondes. Ce traitement a généralement pour effet d'abaisser encore la teneur en eau dans le produit final, jusqu'à une valeur qui peut être comprise entre environ 3% et 12% en poids, par exemple entre environ 5% et 10% en poids, ou encore entre environ 6% et 9% en poids, compatible avec les impératifs de conservation de longue durée, tout en procédant à l'expansion de la pâte selon un rapport d'expansion (en volume) d'environ 1,5 à 6,0, par exemple de 2,0 à 3,5 environ. Les paramètres de ce traitement par micro-ondes, tels que durée, puissance, longueur d'ondes, etc., peuvent être aisément ajustés par l'homme du métier en fonction de la teneur en eau, de la taille moyenne et de la dispersion de tailles des particules de matière protéinée, ainsi que de la forme et du volume des produits finis, etc. A titre non limitatif, on peut citer les paramètres suivants :
- une fréquence d'onde variant dans la gamme usuelle des équipements micro-ondes du commerce,
- une puissance variant dans une gamme comprise entre 200 W et 1000 W environ,
- une durée variant dans une gamme comprise entre 10 et 120 secondes environ, de préférence entre 20 et 100 secondes environ.

Un produit alimentaire sec et croustillant est obtenu à l'issue de cette étape, prêt à être convoyé par bande transporteuse vers un système de conditionnement en vrac ou en sous-ensembles unitaires. Si nécessaire, à l'issue de l'étape (g) on peut prévoir un système de contrôle statistique de qualité, par exemple un système comprenant la mesure du caractère croustillant tel que par exemple la mesure de la force de rupture (en N), afin d'écarter les produits ne répondant pas à la norme fixée.

Les exemples qui suivent sont fournis à titre purement explicatif et illustratif de la présente invention et ne doivent pas être interprétés comme en limitant la portée. Ces exemples peuvent être modifiés en ajustant un ou plusieurs des paramètres opérationnels (température, durée, dimensions) à l'intérieur des gammes chiffrées mentionnées à l'un ou l'autre des paragraphes précédents.

### EXEMPLE 1

Pour cet exemple, le matériel utilisé est un Thermomix de la marque Vorwerk d'une contenance de 1,5 L. Pour réaliser la base, 17,89 g de matière grasse laitière anhydre standard (fournisseur : Corman S.A., Belgique) sont fondus dans 131 ml d'eau de source en chauffant à 50°C et sous agitation faible (Thermomix en position 1) pendant 5 minutes. Ensuite, un mélange de type poudre, contenant 50,23 g de protéines Promilk SH20 (fournisseur : Ingrédia, Arras, France) et 2,10 g de poudre de iota-carraghénanes (marque Textura, fournisseur Albert y Ferran Adria, Barcelone, Espagne) est ajouté sous agitation faible (position 1 du Thermomix). Le mélange est maintenu à 50°C pendant 10 minutes mais l'agitation est augmentée (position 3). Le Thermomix est ensuite réglé sur 90°C et, une fois cette température atteinte, on la maintient pendant 30 secondes (Thermomix en position 1). Le mélange est ensuite directement moulé et placé dans une chambre réfrigérée à 4°C. Après 4 heures de gélification, le produit est démoulé puis découpé en pastilles cylindriques de 18 mm de diamètre et 12 mm de hauteur qui sont directement insérées dans un appareil de déshydratation Ultra FD 1000 de la marque Ezi Dri (de la société BestBay Pty Ltd, Australie) dont la consigne de température est réglée sur 30°C, afin d'ajuster leur humidité à 20% (temps de séchage d'environ 18 heures). La caractéristique principale avantageusement obtenue réside en l'obtention d'un gel très ferme et élastique et donc facilement transformable en pastilles aux dimensions désirées. Les pastilles séchées sont mises dans un four micro-ondes d'une puissance de 750 W pendant 45 secondes. Le volume obtenu après passage au four micro-ondes est en moyenne de 250% par rapport au volume initial [(volume après cuisson)/(volume avant cuisson)^{∗}100%]. Le produit obtenu se caractérise par une forme préservée (la forme obtenue après séchage est semblable à celle après cuisson), un alvéolage fin, une texture croquante et croustillante, et un gout relativement neutre.

### EXEMPLE 2

On répète la méthodologie de l'exemple 1, mais les protéines laitières sont remplacées par des protéines de soja sous forme de l'isolât protéique DENA SOYA PROTEINS 90 C LES (fournisseur : Solina Group). Le texturant utilisé est du sulfate de calcium précipité (pureté de 99.9%). Pour ce mélange, 27,30 g de matière grasse laitière anhydre standard (fournisseur : Corman, Belgique) sont fondus dans 450 ml d'eau de source. Ensuite un mélange de 75,45 g de protéines de soja et de 1g de sulfate de calcium est ajouté sous agitation, suivant le même procédé que pour l'exemple 1. Pour cet essai, la température de 90°C est maintenue pendant 15 minutes pour obtenir un gel par coagulation thermique. La base obtenue est facilement découpée et ne s'étale pas grâce à sa fermeté. Le gonflement résultant du traitement par micro-ondes est supérieur à 300% [(volume après cuisson)/(volume avant cuisson)^{∗}100%]. Le produit obtenu est de couleur plus foncée (due aux protéines de soja), très alvéolé et croquant à la dégustation.

### EXEMPLE 3

Dans un mélangeur-cuiseur-émulsionneur avec couteau malaxeur d'un volume de 5 litres, à double enveloppe pour le chauffage et le refroidissement, commercialisé par le département Stephan de la société Sympak Process Engineering GmbH (Schwarzenbek, Allemagne), on introduit 1140 ml d'eau de source que l'on porte à 70°C sous agitation faible. Ensuite, un mélange de type poudre, contenant 300 g d'isolat protéique laitier (teneur en protéines 86% en poids par rapport à la matière sèche) commercialisé par la société Ingrédia (Arras, France) sous la référence Promilk SH20 (identique à celui utilisé dans l'exemple 1) et 22,5 g d'un agent texturant hydrocolloïde végétal en poudre commercialisé sous le nom Sosa et comprenant carraghénane et gomme de caroube (le même que celui utilisé dans l'exemple 4) est incorporé sous une faible agitation (300 rpm). Le mélange est maintenu à 70°C, pendant 20 minutes sous la même agitation. Il est ensuite refroidi, toujours sous agitation, jusqu'à 45°C pour y incorporer 15 g de l'additif alimentaire E575 (delta-gluconolactone commercialisée par la société Acros) puis après 30 secondes, 0,20 ml de chymosine produite par fermentation, commercialisée par Chr. Hansen (Arpajon, France) sous la dénomination Chy-Max.

Le mélange est ensuite transféré directement dans un récipient et conservé à température ambiante (environ 20°C) pendant 4 heures, puis placé dans une chambre réfrigérée à 4°C. Après 24 heures, le produit est démoulé puis découpé en cubes de 14 mm qui sont directement insérés dans un appareil de déshydratation Ultra FD 1000 de la marque Ezidri (de la société BestBay Pty Ltd, Australie) dont la consigne de température est réglée sur 30°C, afin d'ajuster leur humidité à 16% (temps de séchage d'environ 18 heures). Les pastilles séchées sont mises dans un frigo à 4°C pendant 24 heures. Les pastilles sont alors mises dans un four micro-ondes d'une puissance de 1800 W pendant 28 secondes. Le volume obtenu après passage au four micro-ondes est en moyenne de 280% par rapport au volume initial [(volume après cuisson)/(volume avant cuisson)^{∗}100%]. Le produit obtenu est croquant et croustillant et possède un goût neutre avec une teneur en eau mesurée de 10,2% en poids.

## Revendications

1. Produit alimentaire expansé sec comprenant au moins les ingrédients suivants :
- un concentré protéique de protéine d'origine animale ou végétale, de qualité alimentaire,
- un additif texturant de qualité alimentaire choisi parmi le groupe constitué des hydrocolloïdes et gélifiants végétaux, les additifs protéolytiques et leurs produits d'hydrolyse, et les agents acidifiants et leurs sels, et
- de l'eau résiduelle.
ledit précurseur thermo-expansible étant exempt d'amidon.

2. Produit alimentaire selon la revendication 1, étant exempt de matière grasse de qualité alimentaire, autre qu'une impureté du concentré protéique de protéine d'origine animale ou végétale de qualité alimentaire.

3. Produit alimentaire selon l'une des revendications 1 et 2, dans lequel il est prévu de 65% à 95% en poids de la protéine du concentré protéique d'origine animale ou végétale.

4. Produit alimentaire selon l'une des revendications 1 à 3, **caractérisé en ce qu'**il comprend de 0,2% à 10% en poids de l'additif texturant de qualité alimentaire.

5. Produit alimentaire selon l'une des revendications 1 à 4, **caractérisé en ce qu'**il comprend un sel de qualité alimentaire dérivé d'un agent acidifiant, autre qu'un citrate ou phosphate.

6. Produit alimentaire selon la revendication 5, **caractérisé en ce qu'**il comprend de 0,2 à 6% en poids de sel de qualité alimentaire dérivé d'un agent acidifiant.

7. Produit alimentaire selon l'une des revendications 1 à 4, **caractérisé en ce qu'**il comprend un additif protéolytique ou son produit d'hydrolyse.

8. Produit alimentaire selon la revendication 7, dans lequel l'additif protéolytique est une protéase spécifique de la protéine présente dans le concentré d'origine animale ou végétale, ou un produit d'hydrolyse de celle-ci.

9. Produit alimentaire expansé sec selon la revendication 7, dans lequel l'additif protéolytique est une enzyme d'origine animale, végétale ou microbienne, ou un produit d'hydrolyse de celle-ci.

10. Produit alimentaire expansé sec selon l'une des revendications 7 à 9, dans lequel le concentré de protéine animale de qualité alimentaire est un concentré de protéine de lait, et l'additif protéolytique est de la présure ou une protéase telle que la chymosine.

11. Produit alimentaire selon l'une des revendications 1 à 10, dans lequel la teneur en eau résiduelle est d'au moins 3% en poids et inférieure à 12% en poids.

12. Procédé de fabrication d'un produit alimentaire expansé sec selon l'une des revendications 1 à 11, pour provoquer son expansion et la réduction de la teneur en eau jusqu'à la teneur résiduelle.

## Patentansprüche

1. Trockenexpandiertes Lebensmittelprodukt, das mindestens die folgenden Bestandteile umfasst:
- ein Proteinkonzentrat aus einem tierischen oder pflanzlichen Protein in Lebensmittelqualität,
- einen texturierenden Zusatz in Lebensmittelqualität, der aus der Gruppe ausgewählt ist, die von den pflanzlichen Hydrokolloiden und Gelbildnern, den proteolytischen Zusätzen und ihren Hydrolyseprodukten, den Säuerungsmitteln und ihren Salzen gebildet ist, und
- Restwasser,
wobei der thermisch expandierbare Vorläufer stärkefrei ist.

2. Lebensmittelprodukt nach Anspruch 1, das frei von Fett in Lebensmittelqualität ist, mit Ausnahme einer Unreinheit des Proteinkonzentrats aus einem tierischen oder pflanzlichen Protein in Lebensmittelqualität.

3. Lebensmittelprodukt nach einem der Ansprüche 1 und 2, wobei 65 bis 95 Gew.-% des Proteins des tierischen oder pflanzlichen Proteinkonzentrats vorgesehen sind.

4. Lebensmittelprodukt nach einem der Ansprüche 1 bis 3, **dadurch gekennzeichnet, dass** es 0,2 bis 10 Gew.-% des texturierenden Zusatzes in Lebensmittelqualität umfasst.

5. Lebensmittelprodukt nach einem der Ansprüche 1 bis 4, **dadurch gekennzeichnet, dass** es ein Salz in Lebensmittelqualität als Derivat eines Säuerungsmittels umfasst, mit Ausnahme eines Citrats oder Phosphats.

6. Lebensmittelprodukt nach Anspruch 5, **dadurch gekennzeichnet, dass** es 0,2 bis 6 Gew.-% Salz in Lebensmittelqualität als Derivat eines Säuerungsmittels umfasst.

7. Lebensmittelprodukt nach einem der Ansprüche 1 bis 4, **dadurch gekennzeichnet, dass** es einen proteolytischen Zusatz oder sein Hydrolyseprodukt umfasst.

8. Lebensmittelprodukt nach Anspruch 7, wobei der proteolytische Zusatz eine spezielle Protease des Proteins ist, das in dem tierischen oder pflanzlichen Konzentrat vorhanden ist, oder ein Hydrolyseprodukt desselben.

9. Trockenexpandiertes Lebensmittelprodukt nach Anspruch 7, wobei der proteolytische Zusatz ein tierisches, pflanzliches oder mikrobielles Enzym oder ein Hydrolyseprodukt desselben ist.

10. Trockenexpandiertes Lebensmittelprodukt nach einem der Ansprüche 7 bis 9, wobei das tierische Proteinkonzentrat in Lebensmittelqualität ein Milchproteinkonzentrat ist und der proteolytische Zusatz Lab oder eine Protease wie Chymosin ist.

11. Lebensmittelprodukt nach einem der Ansprüche 1 bis 10, wobei der Restwassergehalt mindestens 3 Gew.-% und unter 12 Gew.-% beträgt.

12. Verfahren zur Herstellung eines trockenexpandierten Lebensmittelprodukts nach einem der Ansprüche 1 bis 11, um dessen Expansion und die Reduzierung des Wassergehalts bis zum Restgehalt hervorzurufen.

## Claims

1. Expanded dry food product comprising at least the following ingredients:
- a protein concentrate of animal or vegetable origin, food-grade,
- a food-grade texturizing additive selected from the group consisting of hydrocolloids and vegetable gelling agents, proteolytic additives and their hydrolysis products, and acidifying agents and salts thereof,
- residual water,
said heat-expandable precursor being free of starch.

2. Food product according to claim 1, being free of fat food grade, other than an impurity of the protein concentrate of animal or vegetable origin, food-grade.

3. Food product according to one of claims 1 and 2, wherein there is provided from 65% to 95% by weight of the protein of the protein concentrate of animal or vegetable origin.

4. Food product according to one of claims 1 to 3, **characterized in that** it comprises from 0.2% to 10% by weight of the food-grade texturizing additive.

5. Food product according to one of claims 1 to 4, **characterized in that** it comprises a food grade salt derivative of an acidifying agent, other than a citrate or phosphate.

6. Food product according to claim 5, **characterized in that** it comprises from 0.2 to 6% by weight of food-grade salt derivative of an acidifying agent.

7. Food product according to one of claims 1 to 4, **characterized in that** it comprises a proteolytic additive or its hydrolysis product.

8. Food product according to claim 7, wherein the proteolytic additive is a specific protease of the protein present in the concentrate of animal or vegetable origin, or a hydrolysis product thereof.

9. Expanded dry food product according to claim 7, wherein the proteolytic additive is an enzyme of animal, plant or microbial origin, or a hydrolysis product thereof.

10. Expanded dry food product according to one of claims 7 to 9, wherein the food-grade animal protein concentrate is a concentrate of milk protein, and the proteolytic additive is rennet or a protease such as chymosin.

11. Food product according to one of claims 1 to 10, wherein the residual water content is at least 3% by weight and less than 12% by weight.

12. A method of manufacturing an expanded dry food product according to one of claims 1 to 11, to cause its expansion and the reduction of the water content to the residual content.
